# EUROPÄISCHE PATENTANMELDUNG

(11) **EP 4 617 022 A1**
(43) Veröffentlichungstag der Anmeldung: **17.09.2025**
(21) Anmeldenummer: 25161904.5
(22) Anmeldetag: 05.03.2025
(51) Int. Cl.: B27B 9/04, B23Q 9/00

(54) **MONTAGEELEMENT FÜR EINE FÜHRUNGSSCHIENE SOWIE FÜHRUNGSANORDNUNG ZUM FÜHREN EINER HANDKREISSÄGE**

(30) Priorität: 11.03.2024 DE 102024106927
(71) Anmelder: Funk, Heinrich, 59872 Meschede (DE)
(72) Erfinder: Funk, Heinrich, 59872 Meschede (DE)
(74) Vertreter: Völler-Blumenroth, Johannes Florian

(57) **Zusammenfassung**

Die Erfindung betrifft ein Montageelement (2) für eine Führungsschiene (4) zum Führen einer Handkreissäge, mit einem Körper (3), der einen eine Werkstückanlageebene ausbildenden Werkstückanlageabschnitt (6) zur Anlage des Montageelements (2) an ein Werkstück und einem eine Führungsschienenanlageebene ausbildenden Führungsschienenanlageabschnitt (8), an dem eine Führungsschiene (4) für eine Handkreissäge festlegbar ist, ausbildet, sowie mit einem Festlegemittel (10) zum Festlegen der Führungsschiene (4) am Führungsschienenanlageabschnitt (8), wobei die Werkstückanlageebene und der Führungsschienenanlageebene zwischen sich einen festen Winkel einschließen, wobei der feste Winkel ein Winkelmaß zwischen 10° und 40°, vorzugsweise zwischen 20° und 30°, weiter vorzugsweise von 25°, aufweist.

## Beschreibung

Die vorliegende Erfindung betrifft ein Montageelement für eine Führungsschiene zum Führen einer Handkreissäge sowie eine entsprechende Führungsanordnung umfassend eine Führungsschiene sowie zumindest zwei Montageelemente.

Wenn Bauteile, insbesondere Holzbauteile, in einem zu erstellenden Werkstück in einer Ecke zusammentreffen, können diese für eine optisch ansprechende Verbindung im Verbindungbereich jeweils mit einem Gehrungsschnitt versehen werden. Für das Erstellen eines Gehrungsschnitts können unter anderem Handkreissägen verwenden werden. Diese werden insbesondere bei langen Schnitten verwendet. Hierzu weisen Handkreissägen eine verstellbare Fußplatte auf. Mit typischen Handkreissägen können Gehrungsschnitte mit Winkeln von bis zu 45° erstellt werden. Über 45°-Gehrungsschnitte in den beiden aneinderstoßenden Bauteilen kann eine 90°-Ecke realisiert werden. Um einen sauberen und geraden Gehrungsschnitt insbesondere bei langen Schnitten einbringen zu können, ist regelmäßig eine Führung der Handkreissäge über einen Parallelanschlag bzw. eine Führungsschiene notwendig.

Wenn jedoch Gehrungsschnitte mit Winkeln erstellt werden sollen, die jenseits des Verstellbereichs der verstellbaren Fußplatte liegen, typischerweise bei Winkel > 45°, können derartige Handkreissägen derzeit nicht verwendet werden. Stattdessen werden Tischkreissägen verwendet, auf denen das Werkstück entsprechend steil angestellt an einem Sägeblatt der Tischkreissäge vorbeigeführt wird.

Weiterhin sind Kappsägen bekannt sowie Vorrichtungen zum Führen von Kappsägen, über die der Winkel eines mit der Kappsäge erstellten Gehrungsschnitts variabel eingestellt werden kann. Durch die Verstellmechanismen zum Einstellen des Winkels sind derartige Vorrichtung komplex.

Aufgabe der vorliegenden Erfindung ist es, eine einfache und kostengünstige Lösung zur Erstellung von Gehrungsschnitten mit besonders spitzen Winkeln > 45° bereitzustellen.

Die vorliegende Erfindung schlägt zur Lösung dieser Aufgabe ein Montageelement für eine Führungsschiene vor. Das Montageelement ist in einer Seitenansicht keilförmig ausgebildet und wird zwischen der Oberfläche eines zu bearbeitenden Werkstücks und einer Führungsschiene zum Führen einer Handkreissäge montiert.

Das Montageelement weist hierzu einen Körper auf, der einen Werkstückanlageabschnitt aufweist., Der Werkstückanlageabschnitt bildet eine Werkstückanlageebene aus und dient zur Anlage des Montageelements an ein Werkstück. Weiterhin weist der Körper einen Führungsschienenanlageabschnitt auf, der eine Führungsschienenanlageebene ausbildet und an dem eine Führungsschiene für eine Handkreissäge festlegbar ist. Das Montageelement weist weiterhin ein Festlegemittel zum Festlegen der Führungsschiene am Führungsschienenanlageabschnitt auf. Die Werkstückanlageebene und die Führungsschienenanlageebene schließen zwischen sich einen festen Winkel. Der feste Winkel beträgt dabei zwischen 10° und 40°, vorzugsweise zwischen 20° und 30°, weiter vorzugsweise 25°. Der Körper ist in einer seitlichen Betrachtungsrichtung parallel zur Werkstückanlageebene und Führungsschienenanlageebene keilförmig ausgebildet.

Der feste Winkel des Montageelements ist dabei unveränderlich und nicht einstellbar. Das Montageelement kann hierdurch besonders einfach und kostengünstig erhalten werden. Insbesondere ist der Körper monolithisch ausgebildet. Der Körper kann aus Kunststoff, Holz oder Metall hergestellt sein. Insbesondere kann der Körper als Kunststoffspritzgussteil hergestellt sein.

Das Montageelement wird mit dem Werkstückanlageabschnitt auf die Oberfläche eines zu bearbeitenden Werkstücks aufgelegt. Auf dem Führungsschienenanlageabschnitt wird eine Führungsschiene für die Handkreissäge festgelegt. Zudem ist das Montageelement an dem Werkstück zu befestigen.

Vorzugsweise werden zumindest zwei derartige Montageelemente verwendet, jeweils an einem ersten und einem zweiten Ende der Führungsschiene bzw. des Werkstücks. Diese bilden eine Führungsanordnung. Zwischen diesen beiden Montageelementen können weitere Montageelemente platziert werden, die die Führungsschiene im Bereich zwischen dem ersten und dem zweiten Montageelement abstützen.

Durch die Verwendung derartiger Montageelemente kann die Führungsschiene für die Handkreissäge in ihrer Längserstreckungsrichtung angewinkelt zur Oberfläche des Werkstücks angeordnet werden. Wenn die Handkreissäge nun darauf eingestellt wird, einen Gehrungsschnitt mit einem Winkel von 45° gegenüber der Führungsschiene zu schneiden, kann durch die Verwendung eines entsprechenden Montageelements ein entsprechend größerer Winkel des Gehrungsschnitts realisiert werden. Bei der Verwendung eines Montageelements, das einen Winkel von 25° zwischen Werkstückanlageebene und Führungsschienenanlagenebene aufweist, kann so ein Winkel von 70° erreicht werden. Das bedeutet, dass das Sägeblatt einer Handkreissäge um insgesamt 70° gegenüber einer Normalposition, in der das Sägeblatt rechtwinklig zur Werkstückoberfläche angeordnet ist, gekippt sein kann.

Auf diese Weise ermöglicht das erfindungsgemäße Montageelement eine einfache und sichere Erstellung von Gehrungsschnitten mit größeren Winkeln als durch den Einstellbereich der Fußplatte der jeweiligen Handkreissäge erreichbar, der typischerweise bei 45° oder knapp darüber endet.

Dadurch, dass das Montageelement ein Festlegemittel zum Festlegen der Führungsschiene aufweist, ist die Führungsschiene fest mit dem Montageelement verbindbar. Dies ist besonders vorteilhaft, wenn zwischen einem ersten und einem zweiten Montageelement weitere Montageelemente verwendet werden sollen, die die Führungsschiene im Bereich zwischen dem ersten und dem zweiten Montageelement unterstützen.

Es wird somit ein einfaches Montageelement mit einem festen Winkel zwischen Führungsschienenanlageabschnitt und Werkstückanlageabschnitt bereitgestellt, das ausgebildet ist, mit einer Führungsschiene für Handkreissägen, insbesondere mit einer der üblichen Führungsschienen für Handkreissägen, zusammenzuwirken. Dabei sind zueinander kompatible Paarungen von Führungsschiene und Handkreissäge zu verwenden.

Vorzugsweise ist das Festlegemittel durch ein Nutelement ausgebildet, dessen Abstand zu der Führungsschienenanlageebene einstellbar ist. Bei dem Nutelement kann es sich um einen Nutenstein, eine Mutter, einen Schraubenkopf oder ein ähnliches Element handeln, das in eine von einer Längsrippe der Führungsschiene ausgebildete Nut, insbesondere eine T-Nut, einbringbar ist. Dadurch, dass der Abstand des Nutelements von der Führungsschienenanlageebene einstellbar ist, kann über das als Nutelement ausgebildete Festlegemittel eine Kraft zwischen Montageelement und Führungsschiene aufgebracht werden, durch die Montageelement und Führungsschiene aneinander festgelegt werden. Das Festlegemittel des Montageelements kann so auf einfache Weise ausgebildet werden.

Besonders vorzugsweise ist der Abstand des Nutelements zur Führungsschienenanlageebene über ein Schraubengewinde einstellbar. Durch die Verwendung eines Schraubengewindes können auf einfache Weise hohe Klemmkräfte durch das als Nutelement ausgebildete Festlegemittel und somit zwischen Montageelement und Führungsschiene aufgebracht werden. Die Einstellung des Abstands von Nutelement und Führungsschienenanlageebene ist über ein solches Schraubengewinde zudem besonders einfach möglich.

Weiter besonders vorzugsweise weist das Montageelement ein Einstellrad auf, über das der Abstand des Nutelements zur Führungsschienenanlageebene einstellbar ist. Durch die Verwendung eines solchen Einstellrades wird die Verwendung eines zusätzlichen Werkzeugs, die grundsätzlich auch dann möglich ist, wenn ein Einstellrad vorgesehen ist, entbehrlich. Die Handhabbarkeit des Montageelements wird vereinfacht. Eine einfache Montierbarkeit ist besonders vorteilhaft, wenn mehrere Montageelemente zur Unterstützung an einer Führungsschiene festgelegt werden sollen.

Weiter besonders vorzugweise weist das Montageelement eine Einstellradausnehmung auf, in der das Einstellrad angeordnet ist. Das Festlegemittel kann so einfach und kompakt am Montageelement angeordnet und dennoch für einen Verwender des Montageelements gut bedienbar erreichbar sein.

Weiter besonders vorzugsweise ist das Nutelement einstückig mit dem Schraubengewinde ausgebildet, wobei das Einstellrad ein Innengewinde aufweist, in das das Schraubengewinde einbringbar ist. Auf diese Weise kann ein Festlegemittel auf besonders einfache Weise realisiert werden.

Bevorzugt weist das Montageelement zumindest ein Befestigungsmittel zum Festlegen des Montageelements an einem Werkstück auf. Über ein solches Befestigungsmittel kann das Montageelement, das mit dem Werkstückanlageabschnitt an einem Werkstück anliegt, an dem Werkstück festgelegt werden. Eine Führungsschiene ist über das Festlegemittel am Führungsschienenanlageabschnitt festgelegt. Ein Montageelement, das ein Befestigungsmittel zum Festlegen des Montageelements an einem Werkstück aufweist, ermöglicht eine besonders einfache Festlegung einer Führungsschiene relativ zum Werkstück. Das Montageelement wird über das Befestigungsmittel am Werkstück festgelegt und die Führungsschiene über das Festlegemittel am Montageelement.

In einer alternativen bevorzugten Ausführungsform weist das Montageelement zumindest eine Aufnahme für ein Befestigungsmittel auf, über das das Montageelement an einem Werkstück festlegbar ist. Bei dem Befestigungsmittel kann es sich um ein Spannwerkzeug, insbesondere eine Zwinge, eine Klemme oder einen Spanner handeln. Ein keilförmig ausgebildetes Montageelement, das eine Aufnahme für ein Befestigungsmittel aufweist, kann auf besonders einfache Weise über ein solches Befestigungsmittel, insbesondere ein Spannwerkzeug, an einem Werkstück festgelegt werden.

Besonders bevorzugt ist die Aufnahme durch eine Aufnahmeausnehmung im Montageelement gebildet. In eine solche Aufnahmeausnehmung im Montagelement kann ein Teil eines Spannwerkzeugs eingebracht werden. Über das Spannwerkzeug kann so auf einfache Weise eine Kraft zwischen dem Montageelement, insbesondere dem die Werkstückanlageebene ausbildenden Werkstückanlageabschnitt, und der Oberfläche des Werkstücks aufgebracht werden. Das Montageelement wird über diese Kraft am Werkstück fixiert.

Weiter besonders bevorzugt ist die Aufnahmeausnehmung in einer Ansicht des Montageelements von der Seite T-förmig ausgebildet. Ein solche Aufnahmeausnehmung ist einfach zu fertigen und kann ein Spannwerkzeug besonders gut aufnehmen.

Weiter besonders bevorzugt ist die T-förmige Aufnahmeausnehmung benachbart zum Werkstückanlageabschnitt angeordnet und zum Werkstückanlageabschnitt offen. Eine derart ausgebildete Aufnahmeausnehmung kann einfach gereinigt werden. Das Festlegen des Montageelements wird nicht durch insbesondere in der Aufnahmeausnehmung angeordnete Sägespäne behindert.

Vorzugsweise weist das Montageelement einen Anschlag für eine Führungsschiene auf, der den Führungsschienenanlageabschnitt begrenzt. Ein derartiger Anschlag erleichtert die Ausrichtung zwischen Montageelement und einer Führungsschiene. Das Festlegen der Führungsschiene am Montageelement bzw. des Montagelements an der Führungsschiene wird hierdurch vereinfacht.

Besonders vorzugsweise begrenzt der Anschlag den Führungsschienenanlageabschnitt an dem Ende, das vom Werkstückanlageabschnitt am weitesten beabstandet ist. Hierdurch kann auf einfache Weise sichergestellt werden, dass eine Führungskante der Führungsschiene korrekt zum Werkstück bzw. einer Oberfläche des Werkstücks ausgerichtet ist.

Die Aufgabe wird weiterhin gelöst durch eine Führungsanordnung zum Führen einer Handkreissäge, umfassend eine Führungsschiene sowie zumindest zwei Montageelemente nach einem der vorhergehenden Ansprüche, wobei die Führungsschiene an den jeweiligen, eine Führungsschienenanlageebene ausbildenden Führungsschienenanlageabschnitten der Montagelemente festgelegt ist. Eine solche Führungsanordnung kann über die Werkstückanlageabschnitte der Montageelemente, die jeweils eine Werkstückanlageebene ausbilden, auf der Oberfläche eines Werkstücks angeordnet werden, wobei die Führungsschiene einen spitzen Winkel mit der Oberfläche des Werkstücks einschließt. Der spitze Winkel ist dabei durch den festen Winkel zwischen den Führungsschienenanlageabschnitten und Werkstückanlageabschnitten der Montageelemente bestimmt. Eine derartige Führungsanordnung kann besonders einfach erhalten und verwendet werden. Eine Handkreissäge kann an dieser Führungsanordnung vorbeigeführt werden, um Gehrungsschnitte mit besonders großen Winkeln zu realisieren, die ohne die Verwendung einer derartigen Führungsanordnung nicht erreicht werden können. Typischerweise liegen die mit einer Handkreissäge erreichbaren Gehrungsschnitte ohne eine erfindungsgemäße Führungsanordnung bei 45° oder geringfügig darüber.

Der konkrete Gehrungswinkel des Gehrungsschnitts wird dabei durch die verstellbare Fußplatte der Handkreissäge eingestellt. Eine solche Führungsanordnung ist wegen der Verwendung von Montageelementen mit festen Winkeln einfach und trotz der Verwendung von Montageelementen mit festen Winkeln flexibel einsetzbar.

Weitere Vorteile und Einzelheiten der Erfindung sind der nachfolgenden Figurenbeschreibung mit beispielhaften erfindungsgemäßen Ausbildungen zu entnehmen. In den Figuren zeigt auf schematische Weise:
- Fig. 1: ein erfindungsgemäßes Montageelement;
- Fig. 2: einen Ausschnitt einer Führungsanordnung umfassend eine Führungsschiene sowie zumindest zwei Montageelemente, von denen in Fig. 2 eines dargestellt ist.

Gleich oder ähnlich wirkende Teile sind - sofern dienlich - mit identischen Bezugsziffern versehen. Einzelne technische Merkmale der nachfolgend beschriebenen Ausführungsbeispiele können mit den Merkmalen des Anspruchs 1 sowie mit den Merkmalen einzelner vorbeschriebener Ausführungsbeispiele zu erfindungsgemäßen Gegenständen kombiniert werden.

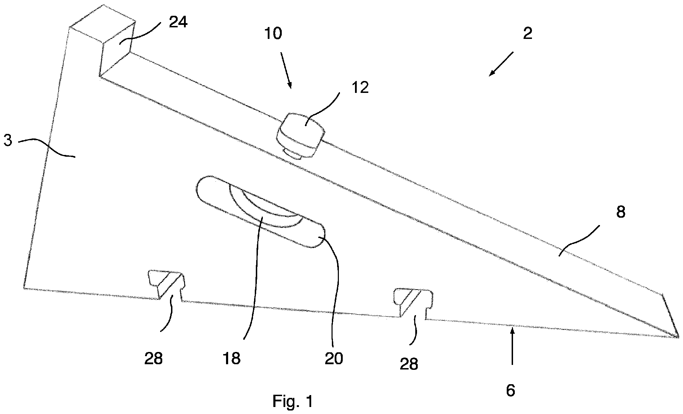

Fig. 1 zeigt ein Montageelement 2 für eine Führungsschiene 4 zum Führen einer Handkreissäge. Das Montageelement 2 weist einen Körper 3 auf, der einen Werkstückanlageabschnitt 6 sowie einen Führungsschienenanlageabschnitt 8 ausbildet. Der Werkstückanlageabschnitt 6 bildet eine Werkstückanlageebene aus. Der Führungsschienenanlageabschnitt 8 bildet eine Führungsschienenanlageebene aus. Die Werkstückanlageebene und die Führungsschienenanlageebene schließen zwischen sich einen festen Winkel ein. Im Ausführungsbeispiel beträgt dieser Winkel 25°.

Der Winkel zwischen Führungsschienenanlageebene und Werkstückanlagenebene ist ein spitzer Winkel zwischen 10° und 40°, vorzugsweise zwischen 20° und 30°, besonders vorzugsweise von 25°. Der Körper 3 des Montageelements 2 ist dadurch in einer Seitenansicht parallel zur Werkstückanlageebene und Führungsschienenanlageebene betrachtet keilförmig ausgebildet.

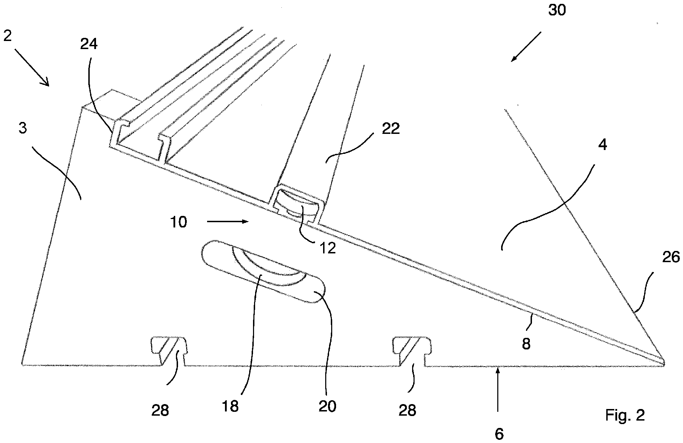

Das Montageelement 2 des Ausführungsbeispiels umfasst ein Festlegemittel 10. Das Festlegemittel umfasst ein Nutelement 12. Im Ausführungsbeispiel ist das Nutelement 12 als Schraubenkopf einer Schraube und einem Schraubengewinde ausgebildet. Der Schraubenkopf ist an zwei einander gegenüberliegenden Seiten abgeflacht ausgebildet, um das Nutelement 12 auszubilden. Dieser als Nutelement 12 ausgebildete Schraubenkopf der Schraube kann in eine insbesondere T-förmige Nut 22 einer Führungsschiene 4 eingebracht werden. Das Montagelement 2 weist ein Einstellrad 18 auf, das in einer Einstellradausnehmung 20 des Montageelements 2 angeordnet ist. Über das Einstellrad 18 kann der Abstand des Schraubenkopfs der Schraube zu der durch den Führungsschienenanlageabschnitt 8 ausgebildeten Führungsschienenebene eingestellt werden. Wenn der Schraubenkopf 14 in die insbesondere T-förmige Nut 22 eingebracht ist, kann die Führungsschiene 4 über das Einstellrad 18 gegenüber dem Führungsschienenanlageabschnitt 8 des Montageelements 2 verspannt werden, wie dies in Fig. 2 dargestellt ist.

Das Montageelement 2 weist einen Anschlag 24 für eine Führungsschiene 4 auf. Der Anschlag 24 begrenzt den Führungsschienenanlageabschnitt 8 des Montageelements 2. Der Anschlag 24 erleichtert es, eine Führungsschiene 14 so an dem Führungsschienenanlageabschnitt 8 zu positionieren, dass eine Führungskante 26 der Führungsschiene 4 korrekt zu einer Werkstückoberfläche ausgerichtet werden kann. Der Anschlag 24 begrenzt den Führungsschienenanlageabschnitt 8 an dem Ende, das am weitesten von dem Werkstückanlageabschnitt 6 des Montageelements 2 beabstandet ist.

Das Montageelement 2 gemäß dem Ausführungsbeispiel weist eine Aufnahme für ein Befestigungsmittel auf, die als eine Aufnahmeausnehmung 28 im Montageelement 2 ausgebildet ist. Das Montageelement 2 des Ausführungsbeispiels weist zwei Aufnahmeausnehmungen 28 auf, die T-förmig ausgebildet und voneinander beabstandet sowie zueinander benachbart am Werkstückanlageabschnitt 6 ausgebildet sind. Die T-förmig ausgebildeten Aufnahmeausnehmungen 28 sind zu dem Werkstückanlageabschnitt 6 offen. Die Aufnahmeausnehmungen 28 sind so ausgebildet, dass zumindest ein Teil einer nicht dargestellten Klemmvorrichtung in eine der Aufnahmeausnehmungen 28 eingebracht werden kann. Das Montageelement 2 kann über die nicht dargestellten Klemmvorrichtungen an einem nicht dargestellten Werkstück befestigt werden.

Fig. 2 zeigt eine Führungsanordnung 30 umfassend eine Führungsschiene 4 sowie mindestens zwei Montageelemente 2, von denen in Fig. 2 eines dargestellt ist. In Längserstreckungsrichtung der Führungsschiene können weitere Montageelemente 2 zur Unterstützung der Führungsschiene 4 vorgesehen sein. Ein erstes, an einem ersten Ende der Führungsschiene 4 angeordnetes Montageelement 2 und ein am gegenüberliegenden Ende der Führungsschiene 4 oder eines Werkstücks angeordnetes Montagelement 2 sind dazu vorgesehen, über die Aufnahmeausnehmungen 28 und damit zusammenwirkende Klemmvorrichtungen an einem Werkstück festgelegt zu werden. Die Führungsschiene 4 der Führungsanordnung 30 wird dann über die Montageelemente 2 an einem Werkstück festgelegt.

Zwischen dem ersten und dem zweiten Montageelement 2 können weitere Montageelemente 2 platziert werden, die die Führungsschiene 4 in dem Bereich zwischen dem ersten Montageelement 2 und dem zweiten Montageelement 2 unterstützen. Diese weiteren Montageelemente sind typischerweise nur an der Führungsschiene, nicht aber am Werkstück festgelegt. An der Führungsschiene 4 der Führungsanordnung 30 kann dann eine Handkreissäge entlanggeführt werden, mit der das Werkstück mit einem Gehrungsschnitt mit einem besonders großen Winkel versehen werden kann.

## Patentansprüche

1. Montageelement (2) für eine Führungsschiene (4) zum Führen einer Handkreissäge, mit einem Körper (3), der einen eine Werkstückanlageebene ausbildenden Werkstückanlageabschnitt (6) zur Anlage des Montageelements (2) an ein Werkstück und einem eine Führungsschienenanlageebene ausbildenden Führungsschienenanlageabschnitt (8), an dem eine Führungsschiene (4) für eine Handkreissäge festlegbar ist, ausbildet, sowie mit einem Festlegemittel (10) zum Festlegen der Führungsschiene (4) am Führungsschienenanlageabschnitt (8), wobei die Werkstückanlageebene und der Führungsschienenanlageebene zwischen sich einen festen Winkel einschließen, wobei der feste Winkel ein Winkelmaß zwischen 10° und 40°, vorzugsweise zwischen 20° und 30°, weiter vorzugsweise von 25°, aufweist.

2. Montageelement nach Anspruch 1, **dadurch gekennzeichnet, dass** das Festlegemittel (10) durch ein Nutelement (12) ausgebildet ist, dessen Abstand zu der Führungsschienenanlageebene einstellbar ist.

3. Montagelement nach Anspruch 2, **dadurch gekennzeichnet, dass** der Abstand des Nutelements (12) zur Führungsschienenanlageebene über ein Schraubengewinde (16) einstellbar ist.

4. Montageelement nach Anspruch 3, **dadurch gekennzeichnet, dass** das Montageelement (2) ein Einstellrad (18) aufweist, über das das Nutelement (12) einstellbar ist.

5. Montageelement nach Anspruch 4, **dadurch gekennzeichnet, dass** das Montageelement (2) eine Einstellradausnehmung (20) aufweist, in der das Einstellrad (18) angeordnet ist.

6. Montageelement nach Anspruch 5, **dadurch gekennzeichnet, dass** das Nutelement (12) einstückig mit dem Schraubengewinde (16) ausgebildet ist und das Einstellrad (18) ein Innengewinde aufweist, in das das Schraubengewinde (16) einbringbar ist.

7. Montageelement nach einem der vorhergehenden Ansprüche, **dadurch gekennzeichnet, dass** das Montageelement (2) zumindest ein Befestigungsmittel zum Festlegen des Montageelements (2) an einem Werkstück aufweist.

8. Montageelement nach einem der Ansprüche 1 bis 6, **dadurch gekennzeichnet, dass** das Montageelement (2) zumindest eine Aufnahme (28) für ein Befestigungsmittel aufweist, über das das Montageelement (2) an einem Werkstück festlegbar ist.

9. Montageelement nach Anspruch 8, **dadurch gekennzeichnet, dass** die Aufnahme (28) durch eine Aufnahmeausnehmung im Montageelement (2) gebildet ist.

10. Montageelement nach Anspruch 9, **dadurch gekennzeichnet, dass** die Aufnahmeausnehmung in einer Ansicht von der Seite T-förmig ausgebildet ist.

11. Montageelement nach Anspruch 10, **dadurch gekennzeichnet, dass** die T-förmige Aufnahmeausnehmung benachbart zum Werkstückanlageabschnitt (6) angeordnet und zum Werkstückanlageabschnitt (6) offen ist.

12. Montageelement nach einem der vorhergehenden Ansprüche, **dadurch gekennzeichnet, dass** der Führungsschienenanlageabschnitt (8) durch einen Anschlag (24) für eine Führungsschiene (4) begrenzt ist.

13. Montageelement nach Anspruch 12, **dadurch gekennzeichnet, dass** der Anschlag (24) den Führungsschienenanlageabschnitt (8) an dem Ende begrenzt, das von dem Werkstückanlageabschnitt (6) am weitesten beabstandet ist.

14. Führungsanordnung zum Führen einer Handkreissäge, umfassend eine Führungsschiene (4) sowie zumindest zwei Montageelemente (2) nach einem der Ansprüche 1 bis 13, wobei die Führungsschiene (4) an den jeweiligen, eine Führungsschienenanlageebene ausbildenden Führungsschienenanlageabschnitten (8) der Montageelemente (2) festgelegt ist.
